# EUROPEAN PATENT APPLICATION

(11) **EP 1 605 677 A1**
(43) Date of publication of application: **14.12.2005**
(21) Application number: 05251860.2
(22) Date of filing: 24.03.2005
(51) Int. Cl.: H04M 19/04

(54) **Telephony device ring determination by scheduler**

(30) Priority: 09.06.2004 US 865115
(71) Applicant: Avaya Technology Corp., Basking Ridge, NJ 07920 (US)
(72) Inventor: Mohler, David S., Arvada, CO 80005 (US)
(74) Representative: Williams, David John

(57) **Abstract**

A system for selecting a notification mode for notifying a user of an incoming communication that makes reference to a user scheduling application is provided. The system allows a notification mode that is appropriate to a scheduled user status to be applied. Accordingly, a user is not required to manually select an appropriate notification mode as the user moves between activities that have been scheduled in the user scheduling application. Therefore, the potential for incoming communications to disrupt user activities is reduced.

## Description

### FIELD OF THE INVENTION

The present invention relates to the control of notification modes applied by a telephone device. In particular, the present invention relates to referencing a scheduling application in connection with determining an appropriate notification mode.

### BACKGROUND OF THE INVENTION

With proliferation of cell phones, pagers, and other wireless devices, such as personal digital assistants (PDAs), there has been an increase in undesirable disruptions. The ability for a user of a communication device to select loud and/or distinctive rings so that the user can more easily identify their own "ring signature" only adds to the problem of such disruptions. A related aspect of the problem also exists for users that wish to set ring preferences for home or office phones. For example, setting one's office phone to suppress the audible ring at times when the user is in a meeting-is desirable without having to mute the ring manually.

The prior art solution to disruptive rings or other notification modes relies on manual activation by the user of a silent ring mode. For example, cellular telephones may provide a vibrate mode that can be used instead of a ringer. As another alternative, a device can be switched off, or a selection can be made to have all incoming calls routed immediately to messaging. However, many users forget or don't bother to select such alternate notification modes before entering situations in which normal notification modes would be disruptive. As a result, audible rings that are disruptive to the user and/or others in the immediate area are common in restaurants, meetings, seminars, theaters, etc. Furthermore, the likelihood and problem of such disruptions increases as the size of the group that is attending an event or in a common area increases. In particular, because conventional devices rely on individual users to remember to activate less disruptive notification modes, the probability that an incoming message will be received by a device on which a normal notification mode has not been disabled increases.

It would be desirable for ring selection to be automatically made, without requiring direct user intervention. It also would be desirable to allow notification modes to be selected intelligently, such that user time and effort managing notification modes was reduced, and such that audible disruptions were limited.

### SUMMARY OF THE INVENTION

The present invention is directed to solving these and other problems and disadvantages of the prior art. According to embodiments of the present invention, an overlay application or notification mode engine allows a determination of notification mode to be made with reference to a user scheduling application. Access to a user scheduling application allows the scheduled status of a user to be determined. Based on the determined status, an appropriate notification mode can be selected from a notification table. The selected notification mode may then be applied to alert the user to the incoming communication.

In accordance with embodiments of the present invention, the user scheduling application may comprise an electronic calendar maintained by or on behalf of the user. Such an electronic calendar may run on a communication device itself, or on another platform that can accessed by the communication device and/or the platform running the notification mode engine, if different from the communication device. Similarly, the notification condition table that relates the user's scheduled status to a proper notification mode can be maintained as part of or in connection with the notification mode engine, on the platform or device on which the notification mode engine is running, or on some other platform or device. The notification mode engine, after determining a proper notification mode, then controls the communication device, either directly or through an appropriate signal, to apply the determined notification mode.

In accordance with embodiments of the present invention, a user makes entries into a scheduling application, such as an electronic calendar. Such entries may relate to one time events scheduled for a particular date and time, or to recurring events. Furthermore, such entries may relate to a scheduled status for a particular date and time, or to a status that is to be applied at certain times during work days, weekends, certain days of the week, holidays, etc. When an entry comprises a scheduled event, a scheduled status corresponding to that event can be determined by key words used to describe the event. Alternatively or in addition, particular words may be used or selections made with respect to a scheduled status, whether or not such scheduled status is associated with a described event.

When an incoming communication is detected, the scheduling application may be checked to determine the scheduled status of the user. The scheduled status is then associated with an appropriate notification mode. In accordance with embodiments of the present invention, the appropriate notification mode is determined by looking up in a notification condition table the notification mode associated with the scheduled status of the user. The notification engine then controls the communication device such that the determined notification mode is applied.

Additional features and advantages of the present invention will become more readily apparent from the following description, particularly when taken together with the accompanying drawings.

### BRIEF DESCRIPTION OF THE DRAWINGS

**Fig. 1** is a block diagram depicting a communication system in accordance with embodiments of the present invention;
**Fig. 2** is a block diagram depicting a communication system in accordance with other embodiments of the present invention;
**Fig. 3** is a block diagram depicting a communication device in accordance with embodiments of the present invention;
**Fig. 4** is a flowchart depicting aspects of the operation of a communication system in accordance with embodiments of the present invention; and
**Fig. 5** illustrates an example notification condition table in accordance with embodiments of the present invention.

### DETAILED DESCRIPTION

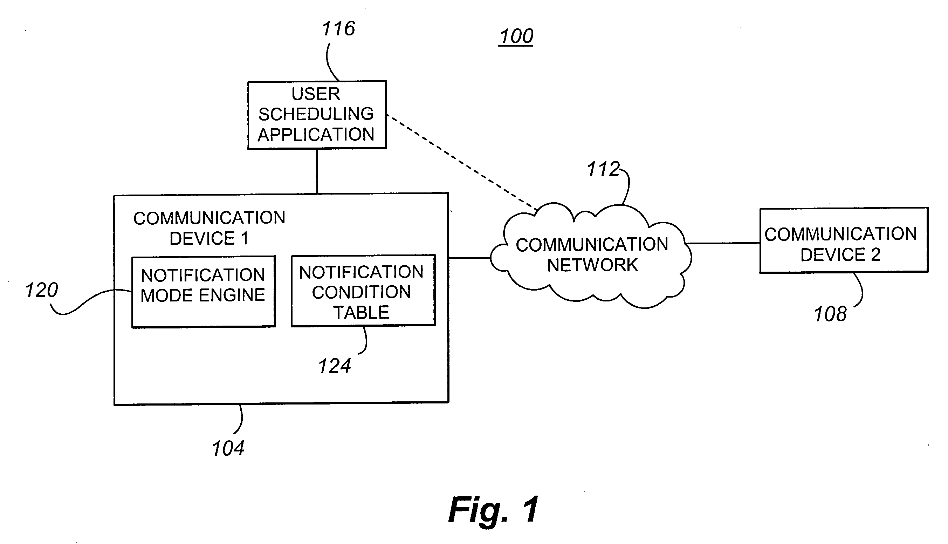

With reference now to **Fig. 1**, a communication system 100 in accordance with embodiments of the present invention is illustrated. In general, the communication system 100 includes a first communication device 104 interconnected to a second communication device 108 through a communication network 112. In addition, the communication system 100 includes a user scheduling application 116 associated with or accessible to the first communication device 104 either directly, or through a communication network 112. A communication device 104 or 108 is generally any device capable of operating as a communication endpoint. Accordingly, examples of communication devices 104, 108 include telephony devices, such as telephones, wireless telephones, soft telephones, and video telephones. Additional examples of communication devices 104, 108 include personal digital assistants (PDAs) having communication capabilities, pagers, and general purpose computing devices. Furthermore, as can be appreciated by one of skill in the art from the description provided herein, a communication device 104, 108 can be part of a device providing additional functions, for example an integrated PDA and cellular telephone.

As shown in Fig. 1, at least the first communication device 104 includes a notification mode engine 120 and a notification condition table 124. The notification mode engine 120 may comprise an application executed by the same first communication device 104 that operates to select an appropriate notification mode in response to a scheduled user status, as indicated by the user scheduling application 116, and a notification mode associated with that status, as indicated by the notification condition table 124, as will be described in greater detail elsewhere herein. The notification condition table 124 may be maintained in memory associated with the communication device 104 and may associate a selected notification mode with a scheduled status.

The communication network 112 may comprise one or more networks of one or more types. For example, the communications network 112 may comprise a switched circuit network, such as the public switched telephone network (PSTN), and/or a packet data network, such as the Internet, intranet, or a combination of one or more intranets and the Internet. As additional examples, the communication network 112 may comprise wireless voice and/or data networks, such as cellular telephone networks. As illustrated in Fig. 1, the communication network 112 may serve to place a first communication device 104 in communication with a second communication device 108 to enable a transfer of voice communications and/or data between the communication devices 104, 108. In addition, in accordance with embodiments of the present invention, a communication device 104 may access a user scheduling application 116 through the communication network 112. According to such embodiments, the particular communication network 112 used to transfer data between the user scheduling application 116 and the first communication device 104 may be different from the communication network 112 used for communications between the first communication device 104 and the second communication device 108. In accordance with still other embodiments of the present invention, the first communication device 104 may be interconnected to the user scheduling application 116 directly, or the user scheduling application 116 may be implemented as part of and/or as an application running on the first communication device 104.

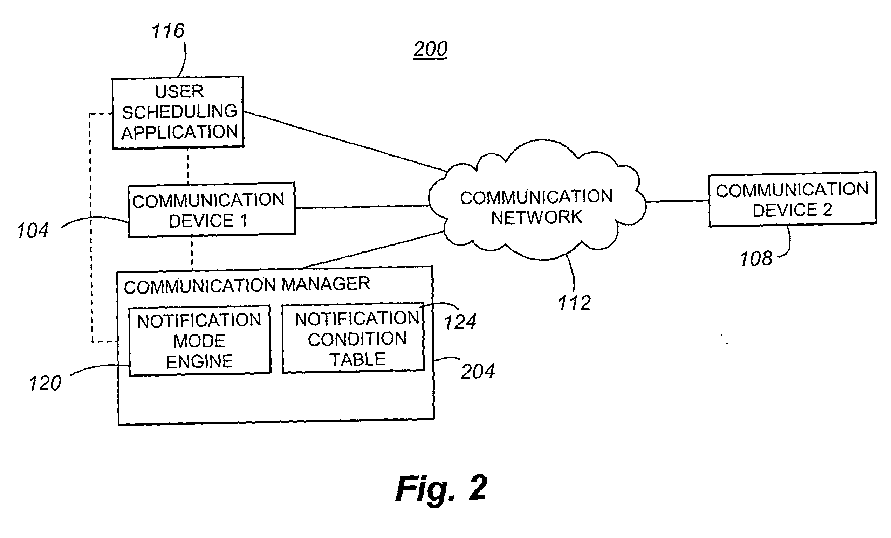

With reference now to **Fig. 2**, a communication system 200 in accordance with other embodiments of the present invention is illustrated. In particular, the system 200 illustrated in **Fig. 2** provides a communication manager 204 for running the notification mode engine 120 and maintaining the notification condition table 124. In accordance with embodiments of the present invention, the communication manager 204 may comprise an application running on a general purpose computer or other programmable device. Furthermore, although the user scheduling application 116 is shown as separate from the communication manager 204, in accordance with embodiments of the present invention, the user scheduling application 116 may be integrated with the communication manager 204. The various applications and/or devices 104, 116 and 204 associated with a first user may be in communication with one another directly, as shown by the dotted lines in **Fig. 2**. Alternatively or in addition, the various components 104, 116, 204 may be in communication with one another through a communication network 112. A communication network 112 used for communications between devices or applications associated with the first user can be different from a communication network 112 used for communications between the first communication device 104 and the second communication device 108.

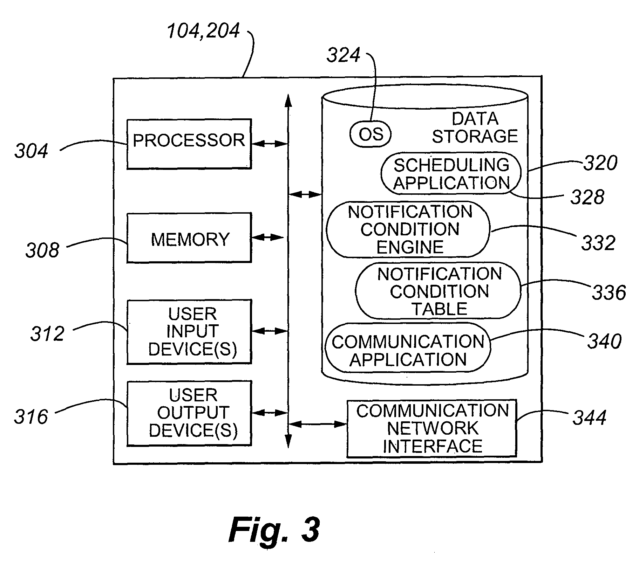

With reference now to **Fig. 3**, components of a communication device 104 or communication manager 204 in accordance with embodiments of the present invention are depicted. The components may include a processor 304 capable of executing program instructions. Accordingly, the processor 304 may include any general purpose programmable processor or controller for executing application programming. Alternatively, the processor 304 may comprise a specially configured application specific integrated circuit (ASIC). The processor 304 generally functions to run programming code implementing various other functions performed by the communication device 104 or communication manager 204, including telephony or other communication functions, scheduling, notification condition engine or other applications as described herein.

A communication device 104 or a communication manager 204 may additionally include memory 308 for use in connection with the execution of programming by the processor 304, and for the temporary or long term storage of data or program instructions. For example, the memory 308 may be used to maintain a notification condition table 124. The memory 308 may comprise sold state memory resident, removable or remote in nature, such as DRAM and SDRAM. Where the processor 304 comprises a controller, the memory 308 may be integral to the processor 304.

In addition, various user input devices 312 and user output devices 316 may be provided. Examples of input devices 312 include a microphone, keyboard, numeric keypad, and pointing device combined with a screen or other position encoder. Examples of user output devices 316 include a speaker, alphanumeric display, ringer, printer port, IrDA port and vibrator.

A communication device 104 or a communication manager 204 may also include data storage 320 for the storage of application programming and/or data. For example, operating system software 324 may be stored in the data storage 320. Examples of applications that may be stored in data storage 320 include user scheduling application software 328, notification condition engine software 332, notification condition table data 336, and/or a communication application 340. As can be appreciated by one of skill in the art, a communication application 340 may comprise program instructions for implementing a soft telephone, for example where the first communication device 104 comprises a general purpose computer. Furthermore, the communication application 340 may comprise instructions controlling the operation of various functions of a first communication device 104 comprising a cellular telephone, the telephony facilities of an integrated telephone and PDA, or other device. The data storage 320 may comprise a magnetic storage device, a solid state storage device, an optical storage device, a logic circuit, or any combination of such devices. It should further be appreciated that the programs and data that may be maintained in the data storage 320 can comprise software, firmware or hardware logic, depending on the particular implementation of the data storage 320.

A communication device 104 or communication manager 204 may also include one or more communication network interfaces 344. For example, a communication device 104 may include a communication network interface 344 comprising a cellular telephone network interface. In addition, a communication device 104 in accordance with embodiments of the present invention that operates in connection with a user scheduling application 116 and/or a separate communication manager 204 may include a communication network interface 344 comprising, for example, a wireless data network connection. Such wireless data network connection 344 may be in addition to and separate from the communication network interface 344 for interconnecting to a telephony network, or the provided communication network interface 344 may be capable of supporting both data and telephone communications. With respect to a communication device 204, the communication network interface 344 may comprise a data network connection. Examples of a communication network interface 344 for supporting voice communications include CDMA, TDM, GSM, PSM, satellite, wireless Ethernet (including various IEEE 802.11 (WiFi) interfaces), ultra wide band, satellite telephony, IrDA or other wireless or wireline interfaces.

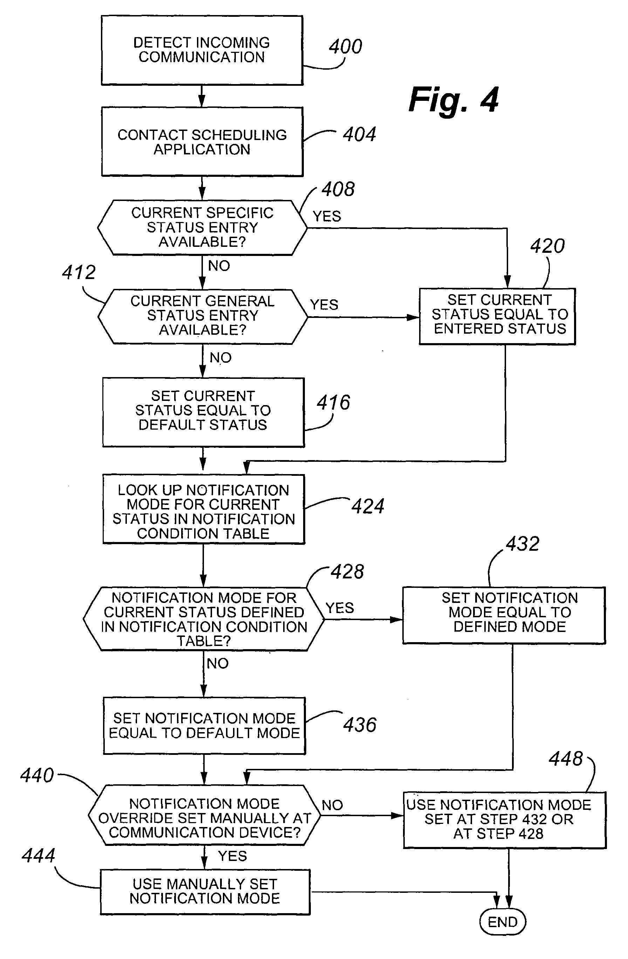

With reference now to **Fig. 4**, the operation of a communication system 100, 200 in accordance with embodiments of the present invention is illustrated. Initially, at step 400, an incoming communication is detected. For example, a telephone call directed to the first communication device 104 placed by the second communication device 108 may be detected by a notification mode engine 120 running on the first communication device 104 or on a communication manager 204 associated with the first communication device 104. The notification mode engine 120 then contacts the user scheduling application 116 to obtain the current scheduled status for the user associated with the first communication device 104 (step 404).

At step 408, a determination is made as to whether a current specific status entry is available from the user scheduling application 116. That is, a determination is made as to whether the user has entered a scheduled activity or a desired status at a date and time corresponding to the date and time at which the incoming communication is detected. An example of a specific status entry would be an entry in the user scheduling application 116 indicating that the user is scheduled to be in a meeting at the date and time that the incoming communication is detected. If a specific status entry is not available, a determination is then made as to whether a current general status entry is available in the user scheduling application 116 (step 412). An example of a current general status entry would be a selection by the user to have an unavailable status every night after 10:00 pm. If there is no specific or general status entry, the current status is set equal to a default status (step 416). The default status may correspond to, for example, a normal audible ring. If a current specific status is found to be available at step 408, the current status is set equal to that specific entered status at step 420. If a current specific status entry is not available, but a general status entry is available, then that general status is set as the current status at step 420.

A status entry may be selected or made by a user or administrator in various ways. For example, according to embodiments of the present invention, a user may make a selection from a menu or a list of available statuses for association with a block of time in the user's scheduling application 116. The different status selections that may be included in a menu or list may be in the form of a qualitative notification mode or method, such as no real-time notification, no audible notification, normal audible notification, loud audible notification, and combined audible and vibrating notification modes. Alternatively or in addition, the scheduled status can be determined by detecting key words associated with a block of time designated in the user's scheduling application 116. For example, words such as meeting, game or theater can comprise or be associated with a user status.

After setting the current status at steps 416 or 420, a look-up of the notification mode for the current status from the notification condition table 124 is performed (step 424). At step 428, a determination is made as to whether a notification mode for the current status is defined in the notification condition table 124. If a notification mode is defined for the current status, a notification mode is set equal to that defined mode (step 432). If a notification mode is not defined for the current status, then the notification mode is set equal to a default mode (step 436).

After setting the notification mode at steps 432 or 436, a determination is made as to whether a notification mode override has been set manually at the communication device 104 (step 440). For example, a user may manually disable an audible ringer by making such a selection directly using the communication device 104, such as when a need to avoid disruptions is realized by the user in real-time. If the user has manually overridden the notification mode, the manually set mode is used to notify the user of the incoming communication (step 444). If the user has not overridden the notification mode, then the notification mode that was set at step 432 or 436 is used to alert the user to the incoming communication (step 448). As can be appreciated by one of skill in the art, a notification mode engine 120 may operate to directly control the notification mode applied by a communication device 104 where the notification mode engine 124 is running on the communication device 104. Where notification mode engine 120 is running on a separate platform, such as on a communication manager 204 that is separate from the communication device 104, the notification mode engine 120 may send a signal to the communication device indicating the notification mode that should be used. Also, it should be appreciated that the notification mode engine 120 need not be aware of a manual override of the notification mode entered by the user in the communication device 104.

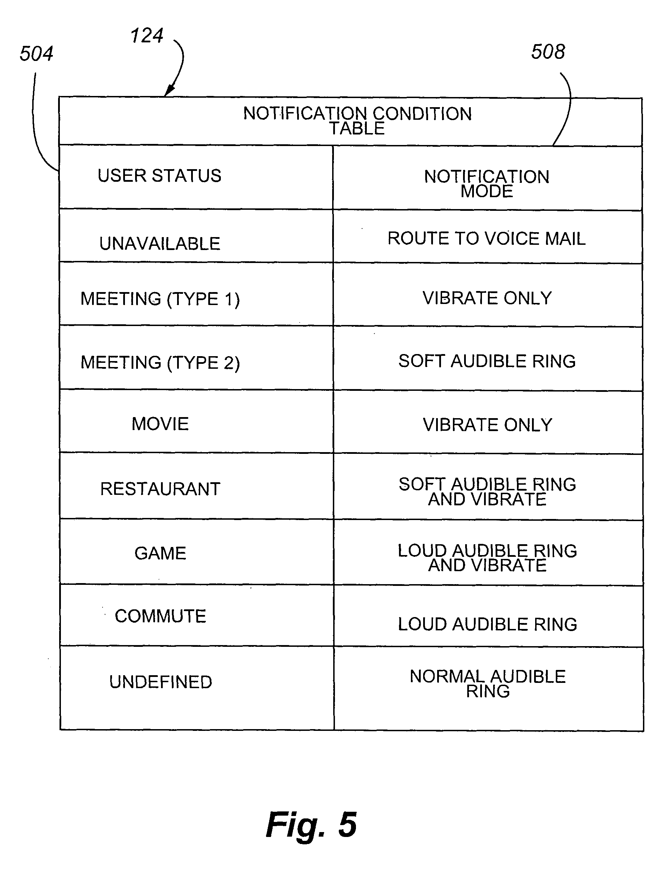

With reference now to **Fig. 5**, an example of the contents of a notification condition table 124 in accordance with embodiments of the present invention is illustrated. In particular, as shown in **Fig. 5**, a notification condition table 124 may include entries for a number of different user statuses 504. In addition, the notification condition table 124 may associate a notification mode 508 with each different user status 504. Examples of such parings include a notification mode comprising routing an incoming communication to voice mail if the user status is unavailable, a vibrate only notification mode corresponding to a meeting (Type 1) user status, a soft audible ring corresponding to a meeting (Type 2) user status; vibrate only notification mode corresponding to a keyword indicating that the user is in a movie; a soft audible ring and vibrate notification mode associated with a keyword indicating that the user is in a restaurant; a loud audible ring and vibrate notification mode associated with a keyword indicating that user is at a game; a loud audible ring in connection with a commute time user status; and a normal audible ring as a default or undefined user status.

As can be appreciated by one of skill in the art, embodiments of the present invention may be applied in connection with portable communication devices, to avoid or limit disruptions caused by incoming communications, according to the scheduled status of the user associated with the communication device. However, the present invention is not so limited. For instance, embodiments of the present invention may be applied to home or office telephones, to avoid disrupting scheduled activities at those locations. Furthermore, it should be appreciated that numerous communication devices associated with a user may have access to a scheduling application 116 associated with that user. For instance, a user scheduling application 116 maintained on a user's office computer may permit access by one or more notification mode engines 120 associated with various communication devices of that user, to provide appropriate notification of incoming communications. As a further example, a central communication manager 204 which may maintain a user's scheduling application 116, may control the notification mode applied by a number of communication devices associated with the user. In addition, embodiments of the present invention may be applied to coordinate between multiple communications devices 104. For example, if a scheduling application 116 indicates that a user is not in the office, calls to the user's office telephone can be routed to the user's cellular telephone. As a further example, if a user's scheduling application 116, in cooperation with the user's notification condition table 124, indicates that a vibrate mode of notification should be used, an incoming communication addressed to a communications device 104 that is not capable of providing such a notification mode can be rerouted to another of the user's communications devices that is capable of providing that mode of notification.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments and with various modifications required by their particular application or use of the invention. It is intended that the appended claims be construed to include the alternative embodiments to the extent permitted by the prior art.

## Claims

1. A method for controlling message notification modes, comprising:
detecting an incoming communication;
obtaining from a scheduling application a current user status;
applying said current user status to a notification condition table to obtain a current notification mode; and
using said current notification mode to alert a user of said incoming communication.

2. The method of Claim 1, wherein said scheduling application contains a specific status entry for a date and time corresponding to a date and time of said detecting an incoming communication, wherein said specific status entry is associated with a status entry type, and wherein said applying said current user status to a notification condition table comprises looking up a notification mode corresponding to said status entry type associated with said specific status entry.

3. The method of Claim 2, wherein said specific status entry comprises a single scheduled activity.

4. The method of Claim 1, wherein said scheduling application contains a general status entry for a date and time corresponding to a date and time of said detecting an incoming communication, wherein said general status entry is associated with a status entry type, and wherein said applying said current user status to a notification condition table comprises looking up a notification mode corresponding to said status entry type associated with said general status entry.

5. The method of Claim 4, wherein said general status entry comprises a specified status scheduled to be applied during a selected period of time on one or more days, wherein said specified status is applied during said selected period of time on each occurrence of said one or more days.

6. A communication system, comprising:
means for notifying a user of an incoming communication having a number of selectable notification modes;
means for recording a scheduled status of a user at a plurality of different times during a day;
means for associating a notification mode with a particular user status;
means for determining said scheduled status of a user and for looking up said associated notification mode for said determined scheduled status in response to detecting a communication addressed to said user; and
means for controlling said means for notifying a user of said incoming communication, wherein said determined notification mode of said means for notifying is selected.

7. The system of Claim 6, further comprising means for communicating, wherein said means for notifying a user of an incoming communication is included in said means for communicating.

8. The system of Claim 7, wherein said means for associating a notification mode with a particular user status is included in said means for communicating.

9. The system of Claim 8, wherein said means for recording a scheduled status of said user is included in said means for communicating.

10. The system of Claim 8, wherein said means for determining a scheduled status of a user and for looking up said associated notification mode is included in said means for communicating.
